# EUROPÄISCHE PATENTSCHRIFT

(11) **EP 1 077 154 B1**
(45) Veröffentlichungstag und Bekanntmachung des Hinweises auf die Patenterteilung: **25.04.2007**
(21) Anmeldenummer: 00250223.5
(22) Anmeldetag: 07.07.2000
(51) Int. Cl.: B60N 2/44

(54) **Fahrzeugsitz**
Vehicle seat
Siège de véhicule

(30) Priorität: 14.08.1999 DE 19938698
(43) Veröffentlichungstag der Anmeldung: 21.02.2001
(73) Patentinhaber: Volkswagen Aktiengesellschaft, 38436 Wolfsburg (DE)
(72) Erfinder: Sinnhuber, Ruprecht Dipl.-Ing, 38518 Gifhorn (DE); Wohllebe, Thomas Dipl.-Ing, 38547 Calberlah (DE)
(74) Vertreter: Schneider, Henry

(56) Entgegenhaltungen:
- DE-A- 3 804 960
- DE-A- 19 719 965
- DE-A- 19 757 533
- DE-A- 19 806 535
- DE-U- 29 815 521
- US-A- 4 655 505

## Beschreibung

Die Erfindung betrifft einen Fahrzeugsitz mit einem Sitzteil und einer Rückenlehne.

Marktübliche Kraftfahrzeugsitze weisen gewöhnlich Polster auf, die aus einer Kombination von Drahtfederung und nachgiebigem Schaumstoffmaterial bestehen. Diese Sitze besitzen eine definierte Polsterkennung, die je nach Fahrzeugtyp und/oder Fahrzeughersteller entweder weicher (Komfortsitz) oder härter (Sportsitz) ist, jedoch nicht nachträglich vom Kunden oder einem anderen Fahrzeuginsassen verändert werden kann, um eine von ihm als bequem empfundene Nachgiebigkeit einzustellen. Außerdem können insbesondere Komfortsitze mit sehr weicher Polsterung in gewissen Unfallsituationen nachteilig sein, weil sie infolge der hohen auftretenden Beschleunigungs- oder Trägheitskräfte zu stark nachgeben und somit keine ausreichende Abstützung oder Rückhaltewirkung liefern.

Aus dem Stand der Technik sind bereits Fahrzeugsitze bekannt, bei denen eine individuelle Einstellung der Nachgiebigkeit der Polsterung möglich ist, um den Fahrzeugkomfort und die Sicherheit eines Fahrzeuginsassen zu erhöhen.

Aus der DE 198 06 535 A1 sind bereits Funktionen zur Sitzkomforteinstellung bekannt. Blasenartige Druckspeicher lassen sich durch veränderbaren Druck in den Blasen eine Einstellung einer gewünschten Nachgiebigkeit der Polsterung und/oder eines gewünschten Oberflächenprofils an einer Sitzfläche des Sitzes beziehungsweise einer Anlehnfläche der Rückenlehne zu.

In der DE 197 57 533 A1 wird vorgeschlagen in der Rückenlehne eines Fahrzeugsitzes mindestens ein, mit einem fließfähigen Medium gefülltes und mit einem in der Kopfstütze angeordneten befüllbaren Element in Verbindung stehendes Reservoir anzuordnen, um mittels der Verdrängung von Gasvolumen bei einem Aufprall den Kopf eines Insassen vor Verletzungen zu schützen, indem eine angemessene Gegenkraft zu der Kopfbewegung geschaffen wird. Für ein offenes System, wobei die Hülle der Reservoire mit semipermeablen Wänden ausgestaltet ist, schlägt die DE 197 57 533 A1 in einer Ausführungsvariante Stützkonstruktionen aus kompressiblem Material, vorzugsweise einem offenporigen Schaum vor. Der, die Stützkonstruktion ausbildende, offenporige Schaum umgibt weiter angeordnete Strömungskanäle, die aufgrund der Permeabilität der Wände den Umgebungsdruck annehmen. Bei Druckerhöhung in den Strömungskanälen, wird eine verbundene Kopfstütze nach vorn und/oder oben bewegt.

Die vorgeschlagenen Lösungen haben den Nachteil, dass das Sitzteil und/oder das Rückenlehnenteil in ihrer nachgiebigsten Polsterungseinstellung bei Unfallsituationen mit hohen auftretenden Beschleunigungs- oder Trägheitskräften zu stark nachgeben und somit keine ausreichende Abstützung oder Rückhaltewirkung liefern.

Ausgehend hiervon liegt der Erfindung die Aufgabe zugrunde, einen Fahrzeugsitz der eingangs genannten Art dahingehend zu verbessern, dass mindestens eine im Sitzteil und/oder in der Rückenlehne angeordnete, mit Gas gefüllte Kammer, so ausgebildet ist, dass sie auch in einer Unfallsituation eine ausreichende Abstützung zu gewährleistet.

Diese Aufgabe wird in Verbindung mit den Merkmalen des Oberbegriffs dadurch gelöst, dass mindestens eine Kammer ein offenporiges Schaumstoffmaterial enthält, dessen Polsterkennung zusammen mit derjenigen des umgebenden Polstermaterials die maximale Nachgiebigkeit der Polsterung bestimmt.

Der Erfindung liegt der Gedanke zugrunde, dass sich die Nachgiebigkeit einer Polsterung und/oder deren Oberflächenprofil verhältnismäßig einfach dadurch verändern lassen, dass die Polsterung eine oder mehrere vorzugsweise mit Luft gefüllte Kammern enthält, in die zusätzliche Luft hineingepumpt oder aus denen ein Teil der Luft abgelassen werden kann, um sie praller oder weniger prall zu füllen. Die Kammern weisen zweckmäßig zumindest auf ihrer der Sitzfläche zugewandten Oberseite beziehungsweise ihrer der Anlehnfläche zugewandten Vorderseite nachgiebige Begrenzungswände auf, die in Abhängigkeit vom Gasdruck in der Kammer bei einseitiger Belastung mehr oder weniger stark ausweichen oder nachgeben und deren Oberflächenprofil sich ebenfalls in Abhängigkeit vom Gasdruck in der Kammer ändert.

Eine bevorzugte Ausgestaltung der Erfindung sieht vor, dass die Kammer oder Kammern in ein umgebendes Polstermaterial eingebettet oder auf ihrer der Sitzfläche zugewandten Oberseite beziehungsweise ihrer der Anlehnfläche zugewandten Vorderseite durch ein Polstermaterial und zwar vorzugsweise ein atmungsaktives, luftdurchlässiges Polstermaterial von der Sitzfläche beziehungsweise der Anlehnfläche getrennt sind, um zum einen die Luftzirkulation zum Körper des Fahrzeuginsassen zu verbessern und zum anderen dafür zu sorgen, dass sich die Polsterung in unmittelbarer Nähe der Sitzfläche beziehungsweise der Anlehnfläche nicht infolge von Seitwärtsbewegungen der nachgiebigen Kammerwände parallel zur Sitz- beziehungsweise Anlehnfläche verschieben kann.

Während es zur Einstellung einer gewünschten Nachgiebigkeit im normalen Fahrbetrieb ausreicht, den Gasdruck mit Hilfe einer manuell aktivierbaren und bevorzugt elektrisch angetriebenen Gas- oder Luftpumpe beziehungsweise eines Ablassventils zu verändern, muss im Crashfall ein sehr schneller Druckaufbau in der Kammer erfolgen, um diese prall aufzupumpen oder aufzublasen und so für eine minimale Nachgiebigkeit der Kammerwände zu sorgen, so dass gemäß einer bevorzugten Ausgestaltung der Erfindung weiter mindestens ein mit der Kammer kommunizierender pyrotechnischer Gasgenerator vorgesehen ist, der im Crashfall aktiviert wird.

Die manuelle Aktivierung der Pumpe kann zum Beispiel durch Knopfdruck erfolgen, wobei so lange Gas in die Kammer gepumpt oder aus der Kammer abgelassen wird, bis der auf dem Fahrzeugsitz sitzende Fahrzeuginsasse seine Sitzposition als bequem empfindet. Daneben kann zusätzlich eine automatische Steuerung in Verbindung mit einem Drucksensor in der Kammer vorgesehen sein, um durch eine entsprechende Zeitdauer der Aktivierung der Pumpe einen von der Steuerung vorgegebenen Druck in der Kammer einzustellen, wobei dieser Druck zum Beispiel einer durch den Fahrzeuginsassen frei wählbaren sehr weichen, weichen, mittelharten, harten oder sehr harten Polsterkennung entsprechen kann, oder einem früher eingestellten individuellen Wert, der zum Beispiel durch Knopfdruck, mittels Speicherchip oder dergleichen erneut angewählt werden kann. An Stelle eines Drucksensors in den Kammern kann auch eine auf der Oberseite von deren Begrenzungswänden oder unter der Sitzfläche beziehungsweise hinter der Anlehnfläche angeordnete Druckmessfolie vorgesehen werden, die den vom Fahrzeuginsassen ausgeübten Druck misst und ansprechend darauf den Druck in den Kammern verändert.

Wenn gemäß einer weiteren bevorzugten Ausgestaltung der Erfindung mehrere Kammern neben- und/oder hintereinander im Sitzteil beziehungsweise neben- und/oder übereinander in der Rückenlehne angeordnet werden, ist es weiter möglich, die Nachgiebigkeit des Polsters ortsabhängig zu verändern, das heißt zum Beispiel am vorderen Ende des Sitzteils oder im Lordosenbereich des Fahrzeuginsassen eine geringere Nachgiebigkeit einzustellen, während am hinteren Ende des Sitzteils beziehungsweise im oberen Teil der Rückenlehne eine größere Nachgiebigkeit der Polsterung eingestellt werden kann. Darüber hinaus können diese Kammern so miteinander und mit der Pumpe verbunden werden, dass es auch möglich ist, die Kammern während der Fahrt abwechselnd stärker oder weniger stark aufzupumpen beziehungsweise Luft zwischen den Kammern hin und her zu pumpen, um insbesondere bei längeren Fahrten Muskelverspannungen des Fahrzeuginsassen entgegenzuwirken.

Durch die erfindungsgemäße Lösung ist es darüber hinaus möglich, jeweils beim Einsitzen, das heißt bei Fahrtantritt, eine verhältnismäßig weiche Polsterkennung einzustellen, die vom Fahrzeuginsassen als bequem empfunden wird, und diese Polsterkennung durch eine automatische Erhöhung des Drucks in den oder einzelnen Kammern insgesamt oder örtlich begrenzt im Verlauf der Fahrt allmählich härter zu machen, um den Körper des Fahrzeuginsassen besser abzustützen, wobei die Druckerhöhung vorzugsweise so langsam erfolgt, dass sie für den Fahrzeuginsassen nicht spürbar ist,

Die automatische Aktivierung im Crashfall erfolgt bevorzugt über eine zentrale Steuerung, die neben dem pyrotechnischen Gasgenerator zum Aufblasen der Kammer im Sitzteil oder in der Rückenlehne noch andere Insassenrückhalteeinrichtungen wie Airbags oder Gurtstraffer aktiviert. Die zentrale Steuerung kann einen oder mehrere Sensoren erfassen, die zum Beispiel bei Überschreiten vorgegebener Beschleunigungswerte entgegen der Fahrtrichtung beziehungsweise in Fahrtrichtung ansprechen und der Steuerung so einen Frontalaufprall des Fahrzeugs beziehungsweise einen Heckaufprall auf das Fahrzeug signalisieren.

Auch im Crashfall weisen Sitzteile beziehungsweise Rückenlehnen mit mehreren hinterbeziehungsweise übereinander angeordneten Kammern Vorteile auf. Zum Beispiel kann eine Kammer im vorderen Ende des Sitzteils bei einem Frontalaufprall stärker aufgeblasen werden, um die Oberschenkel des Fahrzeuginsassen besser abzustützen, oder um die Sitzfläche im Bereich der Auflage der Oberschenkel des Fahrzeuginsassen anzuheben oder nach vorne zu verlängern, während bei einem Heckaufprall der Druck in einer oder mehreren Kammern im oberen und gegebenenfalls im mittleren Teil der Rückenlehne und damit der Neigungswinkel der Anlehnfläche vergrößert werden kann, um dem sogenannten Ramping-Effekt entgegenzuwirken. Zusätzlich kann eine weitere, mit demselben oder einem anderen Gasgenerator verbundene Kammer in der Kopfstütze angeordnet sein, um die Vorderseite der Kopfstütze näher an den Kopf des Fahrzeuginsassen heranzubewegen, wenn dieser bei einem Heckaufprall oder im Anschluss an einen Frontalaufprall nach hinten schwingt.

Die Kammern sind vorzugsweise mit einem elastomeren offenporigen Schaumstoffmaterial gefüllt, das für sich als Polster wirkt und eine gegenseitige Berührung der entgegengesetzten Begrenzungswände der Kammer verhindert, wenn sich der Gasdruck in der Kammer dem äußeren Luftdruck nähert oder diesem entspricht.

Gemäß einer weiteren bevorzugten Ausgestaltung der Erfindung ist innerhalb des Sitzteils eine schräge Rampe angeordnet, die nahe dem hinteren Ende des Sitzteils schwenkbar gelagert ist und sich bis zum vorderen Ende des Sitzteils erstreckt, wobei sie die aufblasbare Kammer oder Kammern trägt. Die Rampe ist zum einen manuell oder motorisch verschwenkbar, so dass sich in Kombination mit einem geeigneten Gasdruck in der oder den Kammern sowohl das Profil der Sitzfläche als auch die Nachgiebigkeit oder Polsterkennung der Polsterung des Sitzteils in weiten Grenzen frei wählen lässt, um das Sitzteil individuell so anzupassen, dass der Sitzkomfort als optimal empfunden wird. Weiter ist die Rampe mit einem im Crashfall aktivierten Schwenkantrieb versehen, der vorzugsweise von einer pyrotechnischen Kolben-/Zylinder-Anordnung mit kraftbegrenzter Rücklaufsperre gebildet wird und die Rampe im Crashfall nach oben schwenkt, um bei einem Frontalaufprall insbesondere im Bereich der Oberschenkel unabhängig von der zuvor gewählten Einstellung der Rampe oder des Gasdrucks in einer darunter angeordneten Kammer für eine harte energieabsorbierende Abstützung des Fahrzeuginsassen zu sorgen.

Im folgenden wird die Erfindung anhand einiger in der Zeichnung dargestellter Ausführungsbeispiele näher erläutert. Es zeigen:

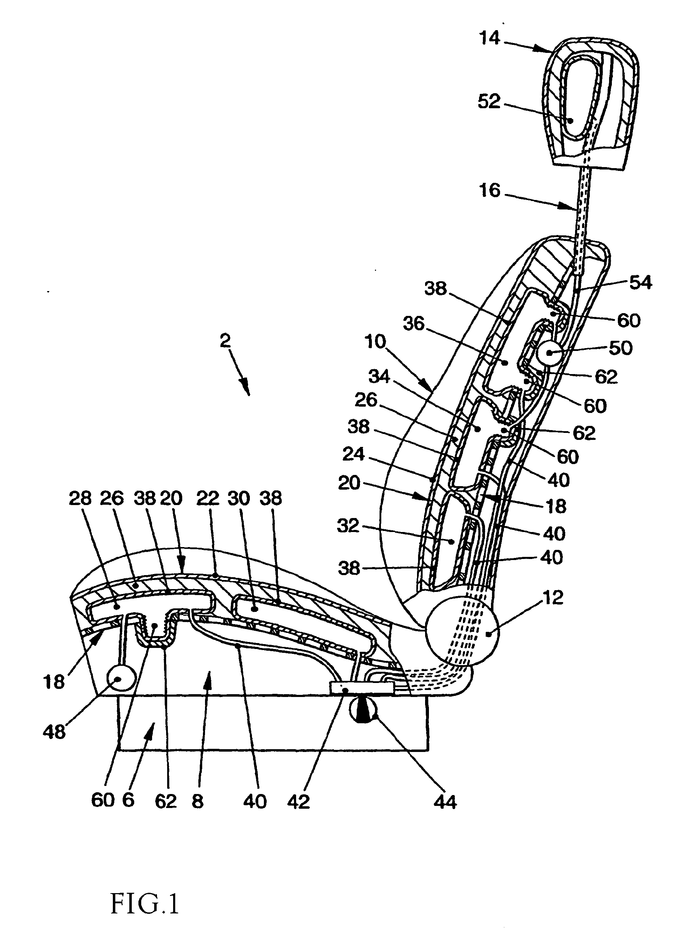

- Figur 1: eine teilweise geschnittene Seitenansicht eines erfindungsgemäßen Fahrzeugsitzes mit mehreren mit Gas gefüllten Kammern im Sitzteil und in der Rückenlehne;
- Figur 2: eine Ansicht entsprechend Figur 1, jedoch kurz nach einem Frontalaufprall eines mit dem Sitz ausgestatteten Kraftfahrzeugs;
- Figur 3: eine Ansicht entsprechend Figur 1, jedoch kurz nach einem Heckaufprall auf ein mit dem Sitz ausgestattetes Kraftfahrzeug;
- Figur 4: eine teilweise geschnittene Seitenansicht eines anderen erfindungsgemäßen Fahrzeugsitzes und
- Figur 5: eine perspektivische Vorderseitenansicht eines weiteren Fahrzeugsitzes mit einer anderen Kammeranordnung.

Die in der Zeichnung dargestellten Kraftfahrzeugsitze 2 bestehen im wesentlichen aus einem starr auf dem Boden eines Kraftfahrzeugs befestigbaren Untergestell 6, einem vom Untergestell 6 getragenen, gegenüber dem Untergestell 6 in und entgegen der Fahrtrichtung verschiebbaren und in diskreten Verschiebestellungen arretierbaren Sitzteil 8 mit einer Rückenlehne 10, deren Neigung gegenüber dem Sitzteil 8 mittels eines Verstellrades 12 verstellbar ist, sowie einer höhenverstellbaren Kopfstütze 14, die über eine ausziehbare Halterung 16 mit der Rückenlehne 10 verbunden ist.

Das Sitzteil 8 und die Rückenlehne 10 weisen jeweils eine Polsterung auf, die aus einem im Rahmen (nicht dargestellt) des Sitzteils 8 beziehungsweise der Rückenlehne 10 verspannten federnden Drahtgeflecht 18, einem zwischen dem Drahtgeflecht 18 und einem Sitzbezug 20 einer oberen Sitzfläche 22 des Sitzteils 8 beziehungsweise einer vorderen Anlehnfläche 24 der Rückenlehne 10 angeordneten Schaumstoffpolster 26 sowie mehreren mit Luft gefüllten Kammern 28, 30, 32, 34, 36, die sich mit ihrer Unter- beziehungsweise Rückseite gegen das federnde Drahtgeflecht 18 abstützen und in das Schaumstoffpolster 26 eingebettet sind.

Die Kammern 28, 30, 32, 34, 36 weisen gasdichte nachgiebige oder flexible Begrenzungswände 38 auf, die bei einer Belastung durch einen auf dem Fahrzeugsitz 2 sitzenden Fahrzeuginsassen durch Verdrängung eines Teils der Luft auf der Seite der Belastung, das heißt an ihrer der Sitzfläche 22 zugewandten Oberseite beziehungsweise an ihrer der Anlehnfläche 24 zugewandten Vorderseite nachgeben, und zwar je nach Luftdruck in der Kammer 28, 30, 32, 34, 36 unterschiedlich stark. Das heißt, bei einer prall gefüllten Kammer 28, 30, 32, 34, 36 gibt die Begrenzungswand 38 an der Oberseite beziehungsweise Vorderseite nicht oder nur geringfügig nach, wenn die vom inneren Luftdruck auf die Begrenzungswand 38 ausgeübte Flächenpressung im wesentlichen den durch die Belastung aufgebrachten äußeren Flächenpressung entspricht und ein seitliches Ausweichen der Begrenzungswände 38 durch das umgebende Polstermaterial 26, benachbarte Kammern und/oder den Rahmen des Sitzteils 8 beziehungsweise der Rückenlehne 10 verhindert wird. Demgegenüber gibt bei einem niedrigeren Luftdruck im Inneren die Begrenzungswand 38 an der Oberseite beziehungsweise Vorderseite der Kammer 28, 30, 32, 34, 36 nach, bis durch die Verringerung des Kammervolumens infolge des Eindrückens der Begrenzungswand 38 der Luftdruck innerhalb der Kammer 28, 30, 32, 34, 36 wieder so weit ansteigt, bis jeweils die inneren und äußeren Flächenpressungen im Gleichgewicht sind.

Das zwischen den Kammern 28, 30, 32, 34, 36 und der Sitzfläche 22 beziehungsweise der Anlehnfläche 24 angeordnete Polstermaterial 26 gewährleistet dabei, dass die Sitzfläche 22 und die Anlehnfläche 24 auch im Gleichgewichtszustand noch eine gewisse Nachgiebigkeit aufweisen. Alternativ könnte dies jedoch zum Beispiel auch dadurch erreicht werden, dass die Begrenzungswände 38 der Kammern 28, 30, 32, 34, 36 begrenzt elastisch dehnbar sind. Außerdem verbessert das offenporige atmungsaktive Polstermaterial 26 die Luftzirkulation zum Körper des Fahrzeuginsassen und ist vorzugsweise elastisch dehnbar, so dass Seitwärtsbewegungen der nachgiebigen Kammerwände 38, soweit vorhanden, nicht bis zur Sitzfläche 22 oder zur Anlehnfläche 24 übertragen werden und somit für den Fahrzeuginsassen nicht spürbar sind.

Durch gezielte Veränderung des Luftdrucks in jeder Kammer 28, 30, 32, 34, 36 lässt sich nicht nur die Nachgiebigkeit der Polsterung des Sitzteils 8 beziehungsweise der Rückenlehne 10 sondern durch das Ausmaß des Eindrückens der Begrenzungswände 38 der Kammern 28, 30, 32, 34, 36 auch die Form des Oberflächenprofils der Sitzfläche 22 beziehungsweise der Anlehnfläche 24 verändern. Zum Beispiel kann die in Höhe der Lordosen des Fahrzeuginsassen angeordnete Kammer 32 stärker oder weniger stark aufgepumpt werden, je nachdem, ob der jeweilige, auf dem Sitz sitzende Fahrzeuginsasse eine stärkere oder weniger starke Abstützung beziehungsweise Vorwölbung in diesem Bereich als angenehm empfindet.

Um eine völlige Entleerung der Kammern 28, 30, 32, 34, 36 zu verhindern, enthalten die Kammern ein elastomeres offenporiges Schaumstoffmaterial (nicht dargestellt), dessen Polsterkennung zusammen mit derjenigen des umgebenden Polstermaterials 26 die maximale Nachgiebigkeit der Polsterung bestimmt, wenn der Luftdruck in der jeweiligen Kammer 28, 30, 32, 34, 36 dem Umgebungsluftdruck entspricht.

Die Kammern 28, 30, 32, 34, 36 weisen jeweils einen Luftanschluss auf, der durch eine Schlauchleitung 40 mit einem an sich bekannten Steuerventil, beispielsweise einem elektromagnetisch gesteuerten Zwei-Wege-Ventil (nicht im Einzelnen dargestellt) einer Ventilgruppe 42 verbunden ist, das zum Ablassen von Luft aus der Kammer 28, 30, 32, 34, 36 eine Verbindung zwischen der Schlauchleitung 40 und der Umgebung beziehungsweise zum Hineinpumpen von Luft in die Kammer 28, 30, 32, 34, 36 eine Verbindung mit einer ebenfalls unter dem Sitzteil angeordneten Luftpumpe 44 herstellen kann. Die Ventile jeder Kammer 28, 30, 32, 34, 36 sind einzeln ansteuerbar, beispielsweise durch federbelastete Kippschalter (nicht dargestellt), welche in ihrer mittleren Ruhestellung das Ventil schließen und jeweils manuell entgegen der Federkraft in eine von zwei Endstellungen ausgelenkt werden können, in denen die Verbindung zur Pumpe beziehungsweise zur Umgebung geöffnet ist, wobei in der zuerst genannten Endstellung gleichzeitig ein Stromkreis für die Stromzufuhr zur Pumpe 44 geschlossen wird. Dies ermöglicht es einem Fahrzeuginsassen, den Luftdruck in jeder Kammer 28, 30, 32, 34, 36 vor der Fahrt zu verändern, bis die Nachgiebigkeit und das Oberflächenprofil als bequem empfunden werden.

Alternativ kann die Ansteuerung der Ventile der Ventilgruppe 42 auch durch eine elektronische Steuerung erfolgen, die mit Drucksensoren (nicht dargestellt) in den einzelnen Kammern 28, 30, 32, 34, 36 gekoppelt ist und die Kammern 28, 30, 32, 34, 36 so lange mit der Pumpe 44 beziehungsweise mit der Umgebung verbindet, bis der gemessene Druck in der jeweiligen Kammer 28, 30, 32, 34, 36 einem vom Benutzer gewählten Druck entspricht.

Dieser Druck kann zum Beispiel nach dem Kauf des Fahrzeugs durch Ausprobieren ermittelt und dann auf einer benutzerspezifischen Speicherkarte gespeichert werden, die anschließend jeweils bei Fahrtantritt von der Steuerung ausgelesen wird.

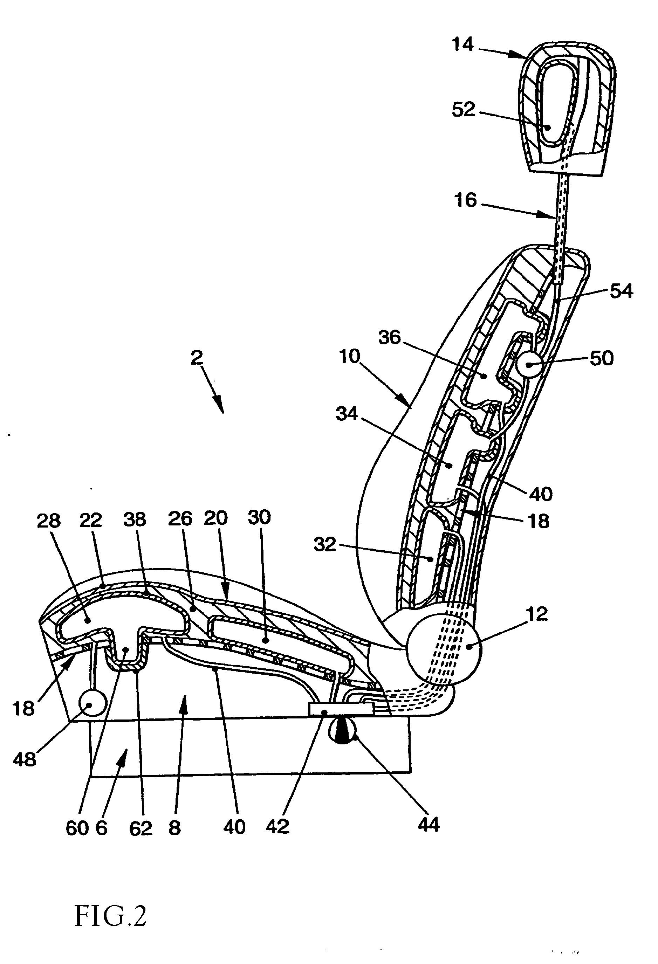

Um bei einem Frontalaufprall eines mit dem Fahrzeugsitz 2 ausgestatteten Fahrzeugs trotz einer gegebenenfalls vom Fahrzeuginsassen eingestellten großen Nachgiebigkeit der Polsterung vor allem am vorderen Ende des Sitzteils 8 eine für diesen Fall bessere harte Abstützung der Oberschenkel des Fahrzeuginsassen sicherzustellen und zu verhindern, dass der Fahrzeuginsasse entlang der Sitzfläche 22 nach vorne aus dem Sitz 2 herausrutscht, ist die am vorderen Ende des Sitzteils 8 angeordnete Kammer 28 mit einem Gasgenerator 48 verbunden. Dieser Gasgenerator 48 wird bei einem Frontalaufprall des Fahrzeugs gezündet und sorgt innerhalb weniger Millisekunden für einen maximalen Gasdruck in der Kammer, so dass deren Begrenzungswände 38 unter maximaler Zugspannung stehen und dadurch praktisch unnachgiebig sind. Außerdem wird durch die prall gefüllte Kammer 28 die Sitzfläche 22 am vorderen Ende des Sitzteils 8 etwas angehoben, was einem Herausrutschen des Fahrzeuginsassen aus dem Sitz 2 ebenfalls entgegenwirkt (vgl. Figur 2).

Der Zünder des Gasgenerators 48 ist mit einer zentralen Airbagsteuerung des Fahrzeugs gekoppelt und wird zusammen mit dem Airbag und gegebenenfalls weiteren Insassenrückhalteeinrichtungen (nicht dargestellt), wie beispielsweise einem Gurtstraffer, gezündet, wenn ein Beschleunigungssensor der Airbagsteuerung die Überschreitung eines vorgegebenen Schwellenwerts der Beschleunigung entgegen der Fahrtrichtung signalisiert.

Die beiden obersten Kammern 34, 36 in der Rückenlehne 10 sind ebenfalls mit einem Gasgenerator 50 verbunden, der jedoch im Unterschied zum Gasgenerator 48 gezündet wird, wenn die Beschleunigung des Fahrzeugs in Fahrtrichtung bei einem Aufprall eines anderen Fahrzeugs auf sein Heck einen vorgegebenen Schwellenwert übersteigt. Durch das Aufblasen der Kammern 34, 36 werden die Schultern eines auf dem Sitz sitzenden Fahrzeuginsassen nach vorne gedrückt und dadurch dem sogenannten Ramping-Effekt, das heißt einer Aufwärtsbewegung seines Oberkörpers entlang der Anlehnfläche 24 entgegengewirkt. Gegebenenfalls kann der Gasgenerator 50 zusätzlich mit einer aufblasbaren Kammer 52 im Inneren der Kopfstütze 14 verbunden sein, um deren Vorderseite beim Heckaufprall näher an den Kopf des Fahrzeuginsassen heranzubewegen.

Dabei erfolgt die Gaszufuhr vorzugsweise durch eine Leitung 54 und durch die hohlen Tragholme 16 der Kopfstütze 14.

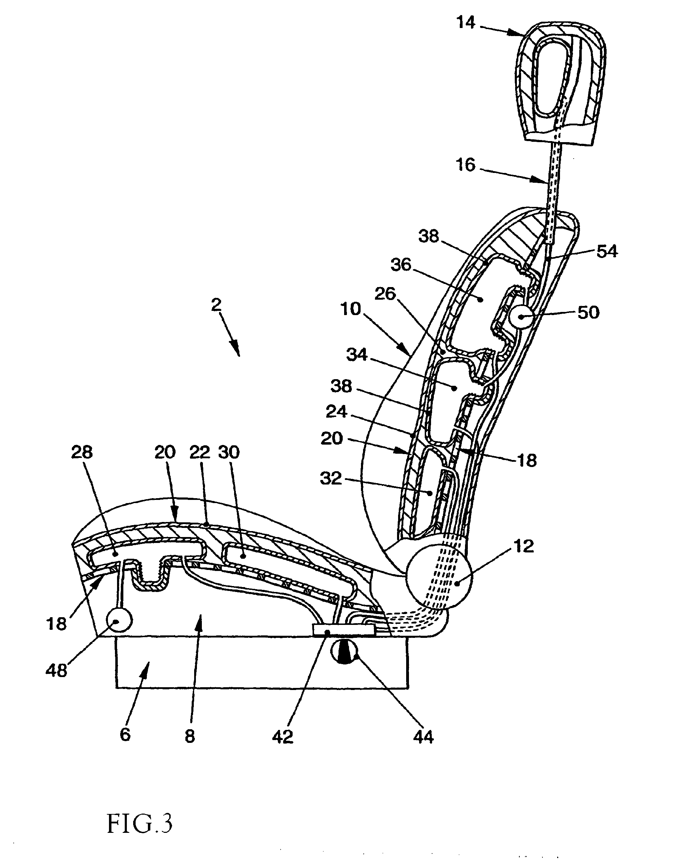

Um beim Aufblasen der Kammern 28 beziehungsweise 34 und 36 sowie gegebenenfalls 52 mittels des Gasgenerators 48 beziehungsweise 50 eine stärkere Aufwölbung der Sitzfläche 22 über der Kammer 28 beziehungsweise der Anlehnfläche 24 vor den beiden Kammern 34 und 36 zu erhalten, weisen diese nach unten beziehungsweise hinten überstehende Ausbuchtungen 60 auf, deren Seitenwände im Normalzustand, das heißt bei den im Fahrbetrieb üblichen Gasdrücken in der Kammer 28, 34, 36 balgartig gefaltet sind. Die Unter- beziehungsweise Rückseiten der Ausbuchtungen 60 sind in starren napfartigen, vom Rahmen des Sitzteils 8 beziehungsweise der Lehne 10 getragenen Widerlagern 62 abgestützt. Beim Aktivieren des Gasgenerators 48 beziehungsweise 50 werden die Kammern 28 beziehungsweise 34, 36 prall mit Gas gefüllt, wobei sich die balgartigen Seitenwände der Ausbuchtungen 60 strecken. Dadurch bewegen sich die obere beziehungsweise vordere Begrenzungswand 38 der Kammer 28 beziehungsweise 34 und 36 ein beträchtliches Stück nach oben beziehungsweise vorne, so dass die Sitzfläche 22 am vorderen Ende des Sitzteils 8 angehoben wird (Figur 2) beziehungsweise die Anlehnfläche 24 der Rückenlehne 10 steiler wird (Figur 3).

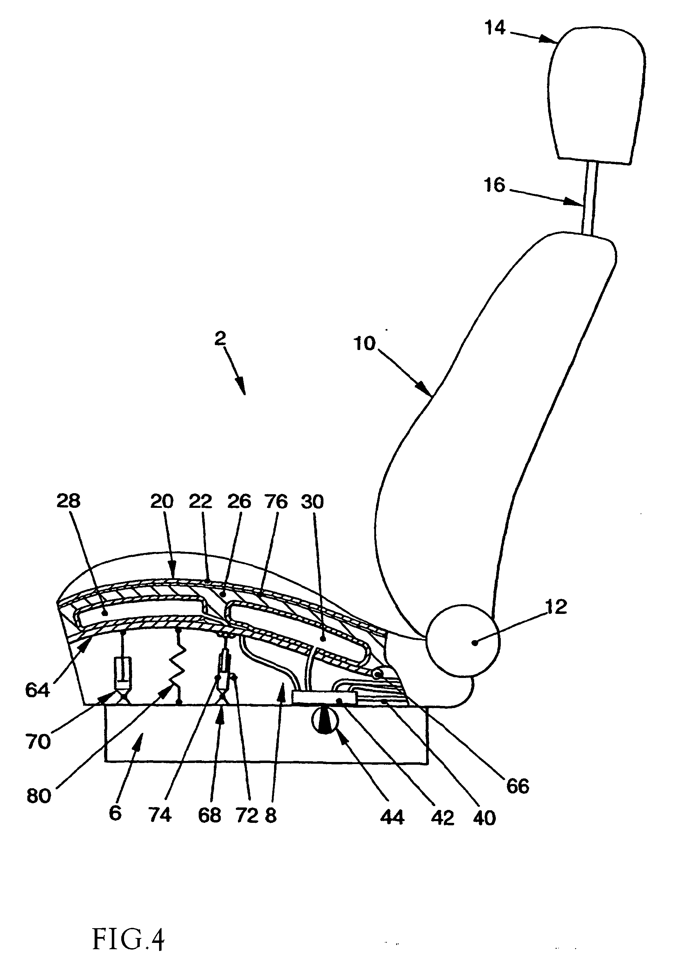

Bei dem in Figur 4 dargestellten Fahrzeugsitz 2 werden die Kammern 28, 30 und das Polstermaterial 26 des Sitzteils 8 statt von einem federnden Drahtgeflecht 18 von einer schrägen Rampe 64 getragen, die nahe dem hinteren Ende des Sitzteils 8 um eine horizontale, quer zur Fahrtrichtung verlaufende Achse 66 schwenkbar gelagert ist und sich bis zum vorderen Ende des Sitzteils 8 erstreckt. Unter der Rampe 64 befindet sich ein Verstellmechanismus 68, der es gestattet, die Rampe 64 um ihre Schwenkachse 66 zu verschwenken und in beliebigen Schwenkstellungen zu arretieren. In Verbindung mit den aufblasbaren Kammern 28, 30 kann dadurch zum einen bei gleichbleibendem Druck in den Kammern 28, 30 die Neigung der Sitzfläche 22 verändert und zum anderen bei einer vom Fahrzeuginsassen vorgegebenen Sitzflächenneigung eine von diesem als bequem empfundene Nachgiebigkeit der Polsterung eingestellt werden.

An Stelle des Gasgenerators 48 und der balgartigen Ausbuchtung 60 der Kammer 28 ist weiter unter dem etwas stärker nach oben gewölbten vorderen Ende der Rampe 64 eine pyrotechnische Zylinder-/Kolben-Anordnung 70 mit kraftbegrenzter Rücklaufsperre vorgesehen, die bei einem Frontalaufprall des Kraftfahrzeugs aktiviert wird und die Rampe 64 in Figur 4 im Uhrzeigersinn nach oben schwenkt, um die Sitzfläche 22 im Bereich des vorderen Endes des Sitzteils 8 anzuheben und dort für eine weitgehend unnachgiebige Abstützung der Oberschenkel des Fahrzeuginsassen zu sorgen. Aus der angehobenen Stellung kann sich die Rampe 64 während oder nach dem Aufprall unter der Einwirkung der Gewichts- und Trägheitskräfte des Fahrzeuginsassen langsam kraftbegrenzt in die zuvor eingestellte Stellung zurückbewegen. Zwischen der Rampe 64 und dem Untergestell 6 kann weiter eine Zugfeder 80 angeordnet sein, welche die Aufwärtsbewegung der Rampe 64 verlangsamt oder dämpft und dazu beiträgt, die Rampe 64 wieder in ihre Ausgangsstellung zurückzubewegen.

Der Verstellmechanismus 68 ist so auf die Zylinder-/Kolben-Anordnung 70 abgestimmt, dass er das Aufwärtsschwenken der Rampe 64 durch die Zylinder-/Kolben-Anordnung 70 nicht behindert. Dazu kann der Verstellmechanismus 68 beispielsweise eine über ein Handrad 72 mit Schneckentrieb drehbare Stellspindel 74 umfassen, auf deren oberem Ende die Rampe 64 aufliegt, ohne dass sie mit der Stellspindel 74 verbunden ist. An Stelle des Handrades 72 kann auch ein elektrischer Verstellmotor mit Schneckengetriebe vorgesehen sein, der wie die Ventile der Ventilgruppe 42 elektronisch angesteuert werden kann.

Alternativ kann als Verstellmechanismus auch ein Hydraulikzylinder verwendet werden, dessen Kolbenstange die Rampe nach oben drückt. Ein derartiger Verstellmechanismus ermöglicht es weiter, über eine Messung des Drucks in der Hydraulikflüssigkeit im Zylinder Aussagen über die Sitzbelegung, das Gewicht des Fahrzeuginsassen, dessen Sitzposition auf dem Sitz oder dergleichen zu treffen.

Bei dem in Figur 4 dargestellten Fahrzeugsitz 2 ist weiter eine Druckmessfolie 76 unter dem Sitzbezug 20 zwischen diesem und den nach oben weisenden Begrenzungswänden 38 der Kammern 28 und 30 angeordnet, die an Stelle von Drucksensoren in den Kammern 28, 30 den vom Fahrzeuginsassen ausgeübten Druck misst.

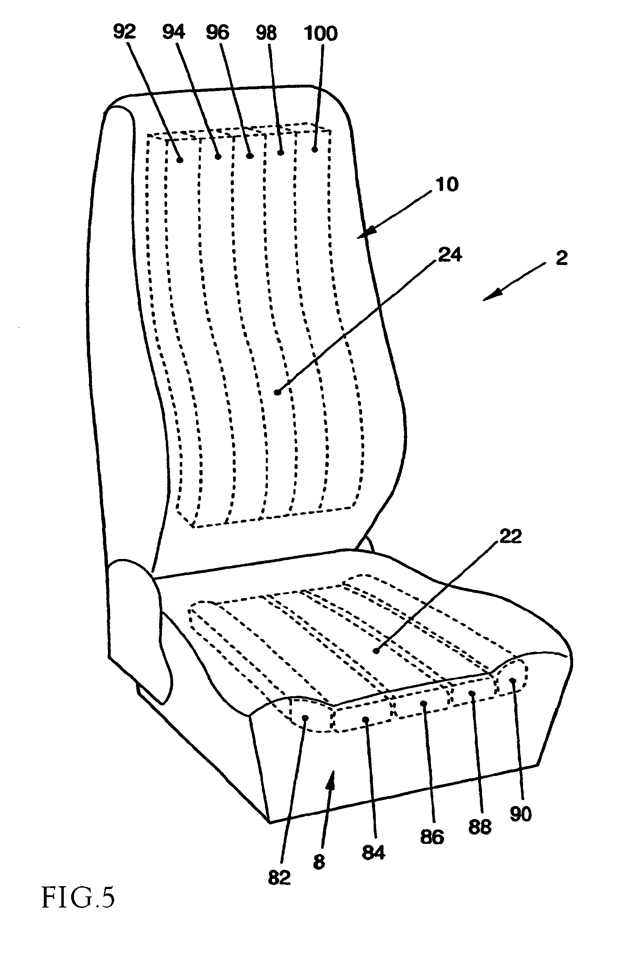

Im Unterschied zu den zuvor beschriebenen Fahrzeugsitzen 2 sind bei dem in Figur 5 dargestellten Fahrzeugsitz 2 jeweils fünf schlauchförmige Kammern 82, 84, 86, 88, 90 und 92, 94, 96, 98, 100 nebeneinander unter der Sitzfläche 22 des Sitzteils 8 beziehungsweise hinter der Anlehnfläche 24 der Rückenlehne 10 angeordnet, wobei jeweils die erste, dritte und fünfte Kammer 82, 86, 90 beziehungsweise 92, 96, 100 sowie jeweils die zweite und vierte Kammer 84, 88 beziehungsweise 94, 98 miteinander verbunden sind. Die Pumpe 44 (nicht sichtbar) ist hier zwischen den beiden kommunizierenden Gruppen von Kammern 82, 86, 90 und 84, 88 beziehungsweise 92, 96, 100 und 94, 98 angeordnet, so dass abwechselnd Luft zwischen diesen hin und her bewegt werden kann, um durch den wechselnden Druck in benachbarten Kammern des Sitzteils 8 und/oder der Rückenlehne 10 eine Massagewirkung zu erzielen, die bei langen Fahrten einer Muskelverspannung infolge einer gleichbleibenden Sitzhaltung entgegenwirkt. Zwischen der Pumpe 44 und jeder der beiden Gruppen von Kammern ist jeweils ein Zwei-Wege-Ventil mit Schließstellung (nicht dargestellt) vorgesehen, durch dessen Betätigung zum einen die Luft in den Kammern des Sitzteils und der Rückenlehne wahlweise oder gemeinsame umgepumpt und zum anderen eine Verbindung zwischen der Pumpe 44 und der Umgebung hergestellt werden kann, so dass der Luftdruck in den Kammern des Sitzteils und/oder den Kammern der Rückenlehne durch kurzzeitiges Abpumpen von Luft oder kurzzeitiges Hineinpumpen von Luft nach Wunsch verändert werden kann.

Durch eine entsprechende Programmierung einer die Pumpe steuernden elektronischen Steuerung kann zudem der Druck in den Kammern im Laufe der Fahrt langsam und für den Fahrzeuginsassen nicht spürbar automatisch erhöht werden, um dessen Körper besser abzustützen.

An Stelle der schlauchförmig ausgebildeten und nebeneinander angeordneten Kammern 82, 84, 86, 88, 90 und 92, 94, 96, 98, 100 sind auch andere Kammeranordnungen möglich. Weiter kann eine gewisse Massagewirkung auch bereits dadurch erzielt werden, dass der Druck in einer einzigen Kammer abwechselnd vergrößert und verringert wird.

## Patentansprüche

1. Fahrzeugsitz mit einem Sitzteil (8) und einer Rückenlehne (10), wobei im Sitzteil (8) und/oder in der Rückenlehne (10) mindestens eine mit einem Gas gefüllte Kammer (28, 30, 32, 34, 36; 82, 84, 86, 88, 90, 92, 94, 96, 98, 100) angeordnet ist, deren Gasdruck veränderbar ist, um eine gewünschte Nachgiebigkeit der Polsterung und/oder ein gewünschtes Oberflächenprofil an einer Sitzfläche (22) des Sitzteils (8) beziehungsweise einer Anlehnfläche (24) der Rückenlehne (10) einzustellen, **dadurch gekennzeichnet, dass** die mindestens eine Kammer (28, 30, 32, 34, 36; 82, 84, 86, 88, 90, 92, 94, 96, 98, 100) ein offenporiges Schaumstoffmaterial enthält, dessen Polsterkennung zusammen mit derjenigen des umgebenden Polstermaterials (26) die maximale Nachgiebigkeit der Polsterung bestimmt.

2. Fahrzeugsitz nach Anspruch 1, **dadurch gekennzeichnet, dass** die Kammer (28, 30, 32, 34, 36; 82, 84, 86, 88, 90, 92, 94, 96, 98, 100) in ein Polstermaterial (26) des Sitzteils (8) und/oder der Rückenlehne (10) eingebettet ist.

3. Fahrzeugsitz nach Anspruch 1 oder 2, **dadurch gekennzeichnet, dass** zwischen der Kammer (28, 30, 32, 34, 36; 82, 84, 86, 88, 90, 92, 94, 96, 98, 100) und einer Sitzfläche (22) des Sitzteils (8) beziehungsweise einer Anlehnfläche (24) der Rückenlehne (10) ein Polstermaterial (26) angeordnet ist.

4. Fahrzeugsitz nach einem der Ansprüche 1 bis 3, **gekennzeichnet durch** eine Einrichtung (44, 42, 48, 50) zur Veränderung des Gasdrucks in der Kammer (28, 30, 32, 34, 36; 82, 84, 86, 88, 90, 92, 94, 96, 98, 100).

5. Fahrzeugsitz nach Anspruch 4, **dadurch gekennzeichnet, dass** die Einrichtung mindestens eine Pumpe (44) und/oder mindestens ein Ventil (42) umfasst.

6. Fahrzeugsitz nach Anspruch 5, **dadurch gekennzeichnet, dass** die Pumpe (44) und/oder das Ventil manuell aktivierbar ist, um einen gewünschten Gasdruck in der Kammer (28, 30, 32, 34, 36; 82, 84, 86, 88, 90, 92, 94, 96, 98, 100) einzustellen.

7. Fahrzeugsitz nach Anspruch 4 oder 5, **dadurch gekennzeichnet, dass** die Einrichtung eine automatische Steuerung zur Ansteuerung der Pumpe (44) und/oder des Ventils (42) umfasst.

8. Fahrzeugsitz nach Anspruch 7, **dadurch gekennzeichnet, dass** die Steuerung einen Drucksensor zur Ermittlung des Gasdrucks in der Kammer (28, 30, 32, 34, 36; 82, 84, 86, 88, 90, 92, 94, 96, 98, 100) umfasst.

9. Fahrzeugsitz nach Anspruch 7 oder 8, **dadurch gekennzeichnet, dass** die Steuerung eine zwischen der Kammer (28, 30, 32, 34, 36; 82, 84, 86, 88, 90, 92, 94, 96, 98, 100) und der Sitzfläche (22) beziehungsweise der Anlehnfläche (24) druckempfindliche Folie (76) umfasst.

10. Fahrzeugsitz nach einem der Ansprüche 7 bis 9, **dadurch gekennzeichnet, dass** die Steuerung einen Speicher zur Speicherung verschiedener Gasdruckeinstellungen umfasst.

11. Fahrzeugsitz nach einem der Ansprüche 1 bis 10, **dadurch gekennzeichnet, dass** mindestens zwei Kammern (82, 84, 86, 88, 90) nebeneinander unter einer Sitzfläche (22) des Sitzteils (8) angeordnet sind.

12. Fahrzeugsitz nach einem der Ansprüche 1 bis 11, **dadurch gekennzeichnet, dass** mindestens zwei Kammern (28, 30) hintereinander unter einer Sitzfläche (22) des Sitzteils (8) angeordnet sind.

13. Fahrzeugsitz nach einem der Ansprüche 1 bis 12, **dadurch gekennzeichnet, dass** mindestens zwei Kammern (92, 94, 96, 98, 100) nebeneinander in der Rückenlehne (10) angeordnet sind.

14. Fahrzeugsitz nach einem der Ansprüche 1 bis 13, **dadurch gekennzeichnet, dass** mindestens zwei Kammern (32, 34, 36) übereinander in der Rückenlehne (10) angeordnet sind.

15. Fahrzeugsitz nach einem der Ansprüche 7 bis 14 **dadurch gekennzeichnet, dass** die Pumpe (44) mit mindestens zwei der Kammern (82, 86, 90 beziehungsweise 84, 88; 92, 96, 100 beziehungsweise 94, 98) zeitlich versetzt verbindbar ist, um den Gasdruck in den Kammern (82, 86, 90 beziehungsweise 84, 88; 92, 96, 100 beziehungsweise 94, 98) abwechselnd zu vermindern und zu vergrößern.

16. Fahrzeugsitz nach Anspruch 15, **dadurch gekennzeichnet, dass** die Pumpe (44) intermittierend Gas zwischen mindestens zwei der Kammern (82, 86, 90 beziehungsweise 84, 88; 92, 96, 100 beziehungsweise 94, 98) hin und her pumpt.

17. Fahrzeugsitz nach einem der Ansprüche 7 bis 16, **dadurch gekennzeichnet, dass** die Steuerung den Gasdruck in der Kammer (28, 30, 32, 34, 36; 82, 84, 86, 88, 90, 92, 94, 96, 98, 100) ausgehend von einem vom Fahrzeuginsassen eingestellten Druck während einer Fahrt langsam auf einen voreinstellbaren oder vorgegebenen Druckwert erhöht.

18. Fahrzeugsitz nach einem der Ansprüche 1 bis 17 **dadurch gekennzeichnet, dass** die Kammer (28, 30, 32, 34, 36; 82, 84, 86, 88, 90, 92, 94, 96, 98, 100) so angeordnet ist, dass sich die Kontur einer Sitzfläche (22) des Sitzteils (8) und/oder einer Anlehnfläche (24) der Rückenlehne (10) in Abhängigkeit vom Gasdruck in der Kammer (28, 30, 32, 34, 36; 82, 84, 86, 88, 90, 92, 94, 96, 98, 100) ändert.

19. Fahrzeugsitz nach einem der Ansprüche 4 bis 18 **dadurch gekennzeichnet, dass** die Einrichtung zur Veränderung des Gasdrucks mindestens einen pyrotechnischen Gasgenerator (48, 50) umfasst.

20. Fahrzeugsitz nach Anspruch 19, **dadurch gekennzeichnet, dass** der pyrotechnische Gasgenerator (48, 50) mit einer Steuerung verbunden ist, die den Gasgenerator (48, 50) bei einem Unfall aktiviert, um den Gasdruck in der Kammer (28, 34, 36) auf einen Maximalwert zu vergrößern.

21. Fahrzeugsitz nach Anspruch 19 oder 20, **dadurch gekennzeichnet, dass** der pyrotechnische Gasgenerator (50) mit mindestens einer Kammer (28) am vorderen Ende des Sitzteils (8) verbunden ist, um den Gasdruck in der Kammer (28) bei einem Frontalaufprall eines mit dem Fahrzeugsitz (2) ausgestatteten Fahrzeugs zu vergrößern.

22. Fahrzeugsitz nach einem der Ansprüche 19 bis 21, **dadurch gekennzeichnet, dass** der pyrotechnische Gasgenerator (50) mit mindestens einer Kammer (34, 36) im oberen Teil der Rückenlehne (10) verbunden ist, um den Gasdruck in der Kammer (34, 36) bei einem Heckaufprall auf ein mit dem Fahrzeugsitz (2) ausgestattetes Fahrzeug zu vergrößern.

23. Fahrzeugsitz nach einem der Ansprüche 19 bis 22, **dadurch gekennzeichnet, dass** der pyrotechnische Gasgenerator (48) mit einer weiteren Kammer (52) oder einem Gassack in einer Kopfstütze (14) der Rückenlehne (10) verbunden ist, um diesen bei einem Heckaufprall auf ein mit dem Fahrzeugsitz (2) ausgestattetes Fahrzeug aufzublasen.

24. Fahrzeugsitz nach einem der Ansprüche 1 bis 23, **gekennzeichnet durch** einen unterhalb der Kammer (28, 30) im Sitzteil (8) angeordneten Polsterträger (64), der an oder nahe seinem hinteren Ende schwenkbar gelagert ist und mindestens einen Schwenkantrieb (68, 70) aufweist, mit dem sich sein Neigungswinkel verändern lässt.

25. Fahrzeugsitz nach Anspruch 24, **dadurch gekennzeichnet, dass**_der Neigungswinkel des Polsterträgers (64) durch einen auf dem Fahrzeugsitz sitzenden Fahrzeuginsassen veränderbar ist, um eine gewünschte Nachgiebigkeit der Polsterung und/oder eine gewünschte Neigung der Sitzfläche des Sitzteils einzustellen.

26. Fahrzeugsitz nach Anspruch 24 oder 25, **dadurch gekennzeichnet, dass** der Neigungswinkel des Polsterträgers (64) bei einem Unfall automatisch veränderbar ist, um die Nachgiebigkeit der Polsterung im Bereich einer Auflage der Oberschenkel eines auf dem Fahrzeugsitz sitzenden Fahrzeuginsassen zu verringern.

27. Fahrzeug, **gekennzeichnet durch** mindestens einen Fahrzeugsitz (2) nach einem der vorangehenden Ansprüche.

## Claims

1. Vehicle seat having a seat part (8) and a backrest (10), with at least one gas-filled chamber (28, 30, 32, 34, 36; 82, 84, 86, 88, 90, 92, 94, 96, 98, 100) being arranged in the seat part (8) and/or in the backrest (10), the gas pressure of which chamber (28, 30, 32, 34, 36; 82, 84, 86, 88, 90, 92, 94, 96, 98, 100) is variable in order to set a desired resilience of the cushioning and/or a desired surface profile on a seat face (22) of the seat part (8) or on a lean-on face (24) of the backrest (10), **characterized in that** the at least one chamber (28, 30, 32, 34, 36; 82, 84, 86, 88, 90, 92, 94, 96, 98, 100) comprises an open-pored foamed material whose cushioning characteristic together with that of the surrounding cushioning material (26) determines the maximum resilience of the cushioning.

2. Vehicle seat according to Claim 1, **characterized in that** the chamber (28, 30, 32, 34, 36; 82, 84, 86, 88, 90, 92, 94, 96, 98, 100) is embedded in a cushioning material (26) of the seat part (8) and/or of the backrest (10).

3. Vehicle seat according to Claim 1 or 2, **characterized in that** a cushioning material (26) is arranged between the chamber (28, 30, 32, 34, 36; 82, 84, 86, 88, 90, 92, 94, 96, 98, 100) and a seat face (22) of the seat part (8) or a lean-on face (24) of the backrest (10).

4. Vehicle seat according to one of Claims 1 to 3, **characterized by** a device (44, 42, 48, 50) for varying the gas pressure in the chamber (28, 30, 32, 34, 36; 82, 84, 86, 88, 90, 92, 94, 96, 98, 100).

5. Vehicle seat according to Claim 4, **characterized in that** the device comprises at least one pump (44) and/or at least one valve (42).

6. Vehicle seat according to Claim 5, **characterized in that** the pump (44) and/or the valve can be activated manually in order to set a desired gas pressure in the chamber (28, 30, 32, 34, 36; 82, 84, 86, 88, 90, 92, 94, 96, 98, 100).

7. Vehicle seat according to Claim 4 or 5, **characterized in that** the device comprises an automatic controller for actuating the pump (44) and/or the valve (42).

8. Vehicle seat according to Claim 7, **characterized in that** the controller comprises a pressure sensor for determining the gas pressure in the chamber (28, 30, 32, 34, 36; 82, 84, 86, 88, 90, 92, 94, 96, 98, 100).

9. Vehicle seat according to Claim 7 or 8, **characterized in that** the controller comprises a pressure-sensitive film (76) between the chamber (28, 30, 32, 34, 36; 82, 84, 86, 88, 90, 92, 94, 96, 98, 100) and the seat face (22) or the lean-on face (24).

10. Vehicle seat according to one of Claims 7 to 9, **characterized in that** the controller comprises a memory for storing different gas pressure settings.

11. Vehicle seat according to one of Claims 1 to 10, **characterized in that** at least two chambers (82, 84, 86, 88, 90) are arranged adjacent to one another below a seat face (22) of the seat part (8).

12. Vehicle seat according to one of Claims 1 to 11, **characterized in that** at least two chambers (28, 30) are arranged one behind the other below a seat face (22) of the seat part (8).

13. Vehicle seat according to one of Claims 1 to 12, **characterized in that** at least two chambers (92, 94, 96, 98, 100) are arranged adjacent to one another in the backrest (10).

14. Vehicle seat according to one of Claims 1 to 13, **characterized in that** at least two chambers (32, 34, 36) are arranged one above the other in the backrest (10).

15. Vehicle seat according to one of Claims 7 to 14, **characterized in that** the pump (44) can be connected in a time-offset manner to at least two of the chambers (82, 86, 90 and 84, 88; 92, 96, 100 and 94, 98) in order to alternately reduce and increase the gas pressure in the chambers (82, 86, 90 and 84, 88; 92, 96, 100 and 94, 98).

16. Vehicle seat according to Claim 15, **characterized in that** the pump (44) intermittently pumps gas back and forward between at least two of the chambers (82, 86, 90 and 84, 88; 92, 96, 100 and 94, 98).

17. Vehicle seat according to one of Claims 7 to 16, **characterized in that**, during a journey, the controller slowly increases the gas pressure in the chamber (28, 30, 32, 34, 36; 82, 84, 86, 88, 90, 92, 94, 96, 98, 100) from a pressure set by the vehicle occupant to a presettable or predefined pressure value.

18. Vehicle seat according to one of Claims 1 to 17, **characterized in that** the chamber (28, 30, 32, 34, 36; 82, 84, 86, 88, 90, 92, 94, 96, 98, 100) is arranged such that the contour of a seat face (22) of the seat part (8) and/or the contour of a lean-on face (24) of the backrest (10) varies as a function of the gas pressure in the chamber (28, 30, 32, 34, 36; 82, 84, 86, 88, 90, 92, 94, 96, 98, 100).

19. Vehicle seat according to one of Claims 4 to 18, **characterized in that** the device for varying the gas pressure comprises at least one pyrotechnic gas generator (48, 50).

20. Vehicle seat according to Claim 18, **characterized in that** the pyrotechnic gas generator (48, 50) is connected to a controller which activates the gas generator (48, 50) in the event of an accident in order to increase the gas pressure in the chamber (28, 34, 36) to a maximum value.

21. Vehicle seat according to Claim 19 or 20, **characterized in that** the pyrotechnic gas generator (50) is connected to at least one chamber (28) at the front end of the seat part (8) in order to increase the gas pressure in the chamber (28) in the event of a frontal collision of a vehicle equipped with the vehicle seat (2).

22. Vehicle seat according to one of Claims 19 to 21, **characterized in that** the pyrotechnic gas generator (50) is connected to at least one chamber (34, 36) in the upper part of the backrest (10) in order to increase the gas pressure in the chamber (34, 36) in the event of a rear-end collision against a vehicle equipped with the vehicle seat (2).

23. Vehicle seat according to one of Claims 19 to 22, **characterized in that** the pyrotechnic gas generator (48) is connected to a further chamber (52) or a gas sack in a headrest (14) of the backrest (10) in order to inflate said chamber (52) or gas sack in the event of a rear-end collision against a vehicle equipped with the vehicle seat (2).

24. Vehicle seat according to one of Claims 1 to 23, **characterized by** a cushioning carrier (64) which is arranged below the chamber (28, 30) in the seat part (8), is pivotably mounted at or close to its rear end and has at least one pivoting drive (68, 70) by means of which its angle of inclination can be varied.

25. Vehicle seat according to Claim 24, **characterized in that** the angle of inclination of the cushioning carrier (64) can be varied by a vehicle occupant seated on the vehicle seat in order to set a desired resilience of the cushioning and/or a desired inclination of the seat face of the seat part.

26. Vehicle set according to Claim 24 or 25, **characterized in that** the angle of inclination of the cushioning carrier (64) can be automatically varied in the event of an accident in order to reduce the resilience of the cushioning in the region supporting the thigh of a vehicle occupant seated on the vehicle seat.

27. Vehicle, **characterized by** at least one vehicle seat (2) according to one of the preceding claims.

## Revendications

1. Siège de véhicule comprenant une partie de siège (8) et un dossier (10), au moins une chambre remplie de gaz (28, 30, 32, 34, 36 ; 82, 84, 86, 88, 90, 92, 94, 96, 98, 100) étant disposée dans la partie de siège (8) et/ou dans le dossier (10), sa pression de gaz pouvant être modifiée afin d'ajuster une souplesse souhaitée du rembourrage et/ou un profil de surface souhaité d'une surface de siège (22) de la partie de siège (8), respectivement d'une surface de dossier (24) du dossier (10), **caractérisé en ce que** l'au moins une chambre (28, 30, 32, 34, 36 ; 82, 84, 86, 88, 90, 92, 94, 96, 98, 100) contient un matériau en mousse à pores ouverts, dont la caractéristique de rembourrage détermine, conjointement avec celle du matériau de rembourrage (26) l'entourant, la souplesse maximale du rembourrage.

2. Siège de véhicule selon la revendication 1, **caractérisé en ce que** la chambre (28, 30, 32, 34, 36 ; 82, 84, 86, 88, 90, 92, 94, 96, 98, 100) est noyée dans un matériau de rembourrage (26) de la partie de siège (8) et/ou du dossier (10).

3. Siège de véhicule selon la revendication 1 ou 2, **caractérisé en ce qu'**un matériau de rembourrage (26) est prévu entre la chambre (28, 30, 32, 34, 36 ; 82, 84, 86, 88, 90, 92, 94, 96, 98, 100) et une surface de siège (22) de la partie de siège (8) ou une surface de dossier (24) du dossier (10).

4. Siège de véhicule selon l'une quelconque des revendications 1 à 3, **caractérisé par** un dispositif (44, 42, 48, 50) pour faire varier la pression de gaz dans la chambre (28, 30, 32, 34, 36 ; 82, 84, 86, 88, 90, 92, 94, 96, 98, 100).

5. Siège de véhicule selon la revendication 4, **caractérisé en ce que** le dispositif comprend au moins une pompe (44) et/ou au moins une soupape (42).

6. Siège de véhicule selon la revendication 5, **caractérisé en ce que** la pompe (44) et/ou la soupape peuvent être actionnées manuellement, afin d'ajuster une pression de gaz souhaitée dans la chambre (28, 30, 32, 34, 36 ; 82, 84, 86, 88, 90, 92, 94, 96, 98, 100).

7. Siège de véhicule selon la revendication 4 ou 5, **caractérisé en ce que** le dispositif comprend une commande automatique pour la commande de la pompe (44) et/ou de la soupape (42).

8. Siège de véhicule selon la revendication 7, **caractérisé en ce que** la commande comprend un capteur de pression pour déterminer la pression de gaz dans la chambre (28, 30, 32, 34, 36 ; 82, 84, 86, 88, 90, 92, 94, 96, 98, 100).

9. Siège de véhicule selon la revendication 7 ou 8, **caractérisé en ce que** la commande comprend une feuille (76) sensible à la pression entre la chambre (28, 30, 32, 34, 36 ; 82, 84, 86, 88, 90, 92, 94, 96, 98, 100) et la surface de siège (22) ou la surface de dossier (24).

10. Siège de véhicule selon l'une quelconque des revendications 7 à 9, **caractérisé en ce que** la commande comprend une mémoire pour mémoriser différents ajustages de pression de gaz.

11. Siège de véhicule selon l'une quelconque des revendications 1 à 10, **caractérisé en ce qu'**au moins deux chambres (82, 84, 86, 88, 90) sont disposées l'une à côté de l'autre sous une surface de siège (22) de la partie de siège (8).

12. Siège de véhicule selon l'une quelconque des revendications 1 à 11, **caractérisé en ce qu'**au moins deux chambres (28, 30) sont disposées l'une derrière l'autre sous une surface de siège (22) de la partie de siège (8).

13. Siège de véhicule selon l'une quelconque des revendications 1 à 12, **caractérisé en ce qu'**au moins deux chambres (92, 94, 96, 98, 100) sont disposées l'une à côté de l'autre dans le dossier (10).

14. Siège de véhicule selon l'une quelconque des revendications 1 à 13, **caractérisé en ce qu'**au moins deux chambres (32, 34, 36) sont disposées l'une au-dessus de l'autre dans le dossier (10).

15. Siège de véhicule selon l'une quelconque des revendications 7 à 14, **caractérisé en ce que** la pompe (44) peut être connectée à au moins deux des chambres (82, 86, 90 ou 84, 88 ; 92, 96, 100 ou 94, 98) de manière décalée dans le temps, afin de réduire et d'augmenter en alternance la pression de gaz dans les chambres (82, 86, 90 ou 84, 88 ; 92, 96, 100 ou 94, 98).

16. Siège de véhicule selon la revendication 15, **caractérisé en ce que** la pompe (44) pompe du gaz de manière intermittente d'avant en arrière entre au moins deux des chambres (82, 86, 90 ou 84, 88 ; 92, 96, 100 ou 94, 98).

17. Siège de véhicule selon l'une quelconque des revendications 7 à 16, **caractérisé en ce que** la commande de la pression de gaz dans la chambre (28, 30, 32, 34, 36 ; 82, 84, 86, 88, 90, 92, 94, 96, 98, 100) augmente lentement depuis une pression ajustée par l'occupant du véhicule pendant la conduite jusqu'à une valeur de pression préajustée ou prédéfinie.

18. Siège de véhicule selon l'une quelconque des revendications 1 à 17, **caractérisé en ce que** la chambre (28, 30, 32, 34, 36 ; 82, 84, 86, 88, 90, 92, 94, 96, 98, 100) est disposée de telle sorte que le contour d'une surface de siège (22) de la partie de siège (8) et/ou d'une surface de dossier (24) du dossier (10) varie en fonction de la pression de gaz dans la chambre (28, 30, 32, 34, 36 ; 82, 84, 86, 88, 90, 92, 94, 96, 98, 100).

19. Siège de véhicule selon l'une quelconque des revendications 4 à 18, **caractérisé en ce que** le dispositif pour faire varier la pression de gaz comprend au moins un générateur de gaz pyrotechnique (48, 50).

20. Siège de véhicule selon la revendication 19, **caractérisé en ce que** le générateur de gaz pyrotechnique (48, 50) est connecté à une commande qui active le générateur de gaz (48, 50) en cas d'accident, afin d'augmenter la pression de gaz dans la chambre (28, 34, 36) à une valeur maximale.

21. Siège de véhicule selon la revendication 19 ou 20, **caractérisé en ce que** le générateur de gaz pyrotechnique (50) est connecté à au moins une chambre (28) à l'extrémité avant de la partie de siège (8), afin d'augmenter la pression de gaz dans la chambre (28) dans le cas d'une collision frontale d'un véhicule muni du siège de véhicule (2).

22. Siège de véhicule selon l'une quelconque des revendications 19 à 21, **caractérisé en ce que** le générateur de gaz pyrotechnique (50) est connecté à au moins une chambre (34, 36) dans la partie supérieure du dossier (10), afin d'augmenter la pression de gaz dans la chambre (34, 36) dans le cas d'une collision par l'arrière sur un véhicule muni du siège de véhicule (2).

23. Siège de véhicule selon l'une quelconque des revendications 19 à 22, **caractérisé en ce que** le générateur de gaz pyrotechnique (48) est connecté à une autre chambre (52) ou à un sac de gaz dans un appui-tête (14) du dossier (10), afin de gonfler celui-ci dans le cas d'une collision par l'arrière sur un véhicule muni du siège de véhicule (2).

24. Siège de véhicule selon l'une quelconque des revendications 1 à 23, **caractérisé par** un support de rembourrage (64) disposé en dessous de la chambre (28, 30) dans la partie de siège (8), qui est monté de manière pivotante sur ou à proximité de son extrémité arrière, et qui présente au moins un entraînement de pivotement (68, 70) avec lequel son angle d'inclinaison peut être modifié.

25. Siège de véhicule selon la revendication 24, **caractérisé en ce que** l'angle d'inclinaison du support de rembourrage (64) peut être modifié par un occupant du véhicule assis sur le siège de véhicule, afin d'ajuster une souplesse souhaitée du rembourrage et/ou une inclinaison souhaitée de la surface de siège de la partie de siège.

26. Siège de véhicule selon la revendication 24 ou 25, **caractérisé en ce que** l'angle d'inclinaison du support de rembourrage (64) peut être modifié automatiquement en cas d'accident, afin de réduire la souplesse du rembourrage dans la région d'un appui de la cuisse d'un occupant du véhicule assis sur le siège de véhicule.

27. Véhicule, **caractérisé par** au moins un siège de véhicule (2) selon l'une quelconque des revendications précédentes.
